Europäisches Patentamt

European Patent Office

Office européen des brevets

(19)

(11) Veröffentlichungsnummer: **0 148 491**
A2

# (12) EUROPÄISCHE PATENTANMELDUNG

(21) Anmeldenummer: 84116111.0

(22) Anmeldetag: 21.12.84

(51) Int. Cl.⁴: **B 29 C 67/22,** B 29 C 33/68

(30) Priorität: 31.12.83 DE 3347711

(43) Veröffentlichungstag der Anmeldung: 17.07.85
Patentblatt 85/29

(84) Benannte Vertragsstaaten: BE FR GB IT

(71) Anmelder: **Jost & Braitsch oHG, Kornbergweg 23,
D-7325 Boll (DE)**

(72) Erfinder: **Braitsch, Fritz, Heidweg 8/1, D-7325 Boll (DE)**

(74) Vertreter: **Patentanwälte Kohler - Schwindling - Späth,
Hohentwielstrasse 41, D-7000 Stuttgart 1 (DE)**

(54) **Verfahren zum Schäumen von Weichschaum.**

(57)  Die Erfindung bezieht sich auf ein Verfahren zum Schäumen von Weichschaum aus Kunststoff unter Verwendung von mindestens einer Papierbahn als Boden- und/oder Seiten- und/oder Oberpapier zur Begrenzung des Schaumstoffkörpers während des Schäumens, die nach dem Schäumen entfernt wird. Die Erfindung besteht darin, daß die Papierbahn an der mit dem Schaum in Berührung kommenden Oberfläche (2) eine Schicht (3) aufweist, die bei dem Entfernen der Papierbahn (1) an dem Schaumstoffkörper (5) verbleibt.

EP 0 148 491 A2

ACTORUM AG

Anmelderin:

Jost & Braitsch oHG
Kornbergweg 23
7325 Boll

Stuttgart, den 14.12.1983
P 4619 EP K/Ho

Vertreter:

Kohler-Schwindling-Späth
Patentanwälte
Hohentwielstraße 41
7000 Stuttgart 1

## Verfahren zum Schäumen von Weichschaum

Die Erfindung bezieht sich auf ein Verfahren zum Schäumen
von Weichschaum aus Kunststoff unter Verwendung von mindestens einer Papierbahn als Boden- und/oder Seiten- und/oder
Oberpapier zum Weitertransport des Schaumkörpers während des
Schäumens bzw. als Träger und Mitlaufpapier während des
Schäumens, die nach dem Schäumen vom Schaumstoffkörper
entfernt wird.

Bei diesen Verfahren wird auf eine Papierbahn, die durch eine dem geschäumten Körper einen gewünschten Querschnitt gebende Formvorrichtung hindurchgeführt wird, flüssiges Material (Flüssigschaum) aufgetragen, das während des Transportes auf dieser Papierbahn durch die Vorrichtung hindurch aufschäumt. Um dem hierbei entstehenden Weichschaumkörper eine quaderförmige Form zu geben, sind an den Seiten einer den Boden bildenden Transportbahn seitliche Wände aus Metall vorgesehen, an denen Papierbahnen etwa mit der gleichen Geschwindigkeit wie das den Boden bildende Transportband entlanggleiten, so daß der Schaum nicht unmittelbar mit den Metallwänden in Berührung kommt. Auch das Transportband ist mit einer Papierbahn belegt und meist ist noch eine eine Decke bildende Papierbahn vorhanden. Diese drei oder vier den Boden, die Decke und die zwei Seitenwände abdeckenden Papierbahnen führen den aufsteigenden Schaum durch die Schäumvorrichtung und schließen einen Hohlraum ein, der durch den sein Volumen vergrößernden Schaumrohstoff passend ausgefüllt wird. Nach Erreichen eines gewünschten Trockengrades werden die die Begrenzung des Schaumstoffkörpers bildenden Papierbahnen vom Schaumstoffkörper abgezogen.

Bei den bisher bei diesem Verfahren verwendeten Papierbahnen bleiben beim Ablösen stets einige Kunststoffreste an der Papieroberfläche kleben, beispielsweise auch dann, wenn die Oberfläche dieser Papierbahnen eine an sich bekannte Oberflächenbehandlung erfahren hat. Messungen haben ergeben, daß beispielsweise pro m² Papier etwa 50 bis 60 g Schaum beim Abziehen dieser Papiere vom Schaumstoffkörper an der Papieroberfläche haften bleiben. Dies führt zu empfindlichen Verlusten an Schaumstoffmaterial. Dabei ist wesentlich, daß eine preisgünstige Papierqualität verwendet wird, da diese
Papierbahnen nach dem Lösen von dem Schaumstoffkörper nicht
mehr verwendet werden können. Auch die Oberflächenbehandlung
der Papierbahnen muß daher entsprechend preisgünstig sein.
Aus diesem Grunde scheidet ein Silikonisieren der Papieroberfläche von vornherein aus, denn die Kosten der Silikonisierung dieser großen Papierflächen liegen in der Größenordnung der bisher als erheblich zu hoch empfundenen Kosten des
beim Lösen der Papierbahnen von dem Schaumstoffkörper haften
gebliebenen Schaumstoffmaterial.

Der Erfindung liegt daher die Aufgabe zugrunde, zur Verwendung bei dem Schäumen von Weichschaumkörpern ein Papier zu
entwickeln, an dem beim Lösen des Papiers von dem Weichschaumkörper möglichst wenig oder kein Schaumstoff haften
bleibt. Dabei soll die die Haftung des Schaumstoffes an der
Papieroberfläche verringernde Behandlung der Papierbahn
weniger Kosten verursachen als der Verlust an Schaumstoffmaterial, der bei Verwendung der bisherigen Papierqualität
entstanden ist.

Diese Aufgabe wird gemäß der Erfindung dadurch gelöst, daß
die bei dem Herstellungsverfahren für Weichschaumkörper
verwendeten Papierbahnen an der mit dem Schaum in Berührung
kommenden Oberfläche eine Schicht aufweisen, die bei dem
Entfernen der Papierbahn an dem Schaumstoffkörper verbleibt.

Da sich beim Entfernen der Papierbahnen von dem Schaumstoffkörper die auf dem Papier befindliche Schicht vom Papier
ablöst und auf die Oberfächen des Schaumstoffkörpers übertragen wird, kommt das Schaumstoffmaterial gar nicht mehr mit der eigentlichen Papieroberfläche in Berührung, sondern nur noch mit der Schicht, die ja beim Abnehmen des Papiers an dem Schaumstoffkörper verbleibt. Daher ist ein Haften von Schaumstoffmaterial an den Papierbahnen ausgeschlossen.

Die Erfindung bezieht sich weiter auf eine Papierbahn zur Durchführung des oben beschriebenen Verfahrens. Die Erfindung besteht darin, daß die Schicht auf der Papierbahn aus einer dünnen Folie besteht. Dies hat den Vorteil, daß die Folie die Papieroberfläche auch bei sehr geringer Dichte vollständig bedeckt, so daß das Schaumstoffmaterial nicht mit der Papieroberfläche in Berührung kommt. Bei anderen Ausführungsformen der Erfindung wird diese Oberflächenschicht durch eine nicht nach Art einer Folie zusammenhängenden Schicht gebildet, sie kann z.B. auch eine rauhe, nichtglatte Oberfläche aufweisen. Die Schicht kann durch Aufsprühen eines geeigneten Kunststoffes auf die Papierbahn hergestellt sein, z.B. auch mit Hilfe eines Extruders aufgebracht sein. Besteht die Schicht aus einer dünnen Folie, so kann diese auch durch übliche Verfahren auf die Papierbahn aufkaschiert sein. Schließlich kann die Schicht auch mit Hilfe eines Klebstoffes auf der Papierbahn befestigt sein, der bei Temperatur, die die Oberfläche des Schaumstoffkörpers in dem Augenblick aufweist, in dem die Papierbahnen von dieser abgezogen werden, seine Haftfähigkeit verringert oder verliert.

Ist die Folie mit einem Klebstoff auf der Papierbahn befestigt, so kann die Folie auf der ganzen Fläche der Papierbahn angeklebt sein, der Klebstoff kann sich jedoch auch nur am Rande der Papierbahn befinden, so daß die Folie also nur an ihren Rändern auf der Papierbahn befestigt ist. Auch bei dieser Ausführungsform kann ebenso wie bei der Klebung auf der ganzen Papierfläche der Klebstoff so eingestellt sein, daß seine Haftfähigkeit zumindest im Augenblick des Abziehens der Papierbahn geringer ist als die Haftfähigkeit der Folie an dem Schaumstoffkörper. Ist dies nicht der Fall, so wird bei der Ausführungsform mit Randverklebung der Folie der die Klebung enthaltende Rand von Papierbahn und Folie abgeschnitten, beispielsweise durch ein Rund- oder Flachmesser, das in der Schäumvorrichtung angeordnet ist.

Die Ausführungsform mit Randverklebung von Folie und Papierbahn kann auch dahingehend weiter ausgebildet sein, daß zumindest die Folie eine Perforierung aufweist, die parallel zum Rand der Papierbahn verläuft, wobei die Klebung zwischen der Perforierung und dem benachbarten Rand der Papierbahn vorgesehen ist. Enthält nur die Folie eine derartige Abreißperforierung, so ist diese so ausgebildet, daß die Kraft, die zum Aufreißen der Perforierung der Folie erforderlich ist, geringer als die Haftung der Folie an dem Schaumstoffkörper.

Die Perforierung kann jedoch bei Ausführungsformen der Erfindung sowohl die Folie als auch die Papierbahn durchsetzen. In diesem Falle wird der die Klebung aufweisende Rand von Folie und Papierbahn durch Aufreißen der Perforierung abgezogen, die Folie verbleibt am Schaumstoffkörper, das Papier wird aufgerollt, der abgerissene, Folie und Papier enthaltende Randabschnitt wird dem Abfall oder einem geeigneten Aufbereitungsverfahren zugeführt. Bei Verwendung der letztgenannten Ausführungsform mit einer die Folie und die Papierbahn durchsetzenden Perforierung kann die Schäumvorrichtung eine Walze oder dergleichen aufweisen, die während des Aufreißens der Perforation zum Abtrennen der die
Klebung enthaltenden Randabschnitte gegen die dem Schaumstoffkörper abgewandte Fläche der Papierbahn drückt, so daß
es in diesem Falle nicht erforderlich ist, daß die beim
Aufreißen der Perforierung angewendete Kraft kleiner ist als
die Kraft, mit der die Folie an dem Schaumstoffkörper haftet.

Bei Ausführungsformen der Erfindung besteht die Schicht aus
Polyäthylen oder Polypropylen. Dies hat den Vorteil, daß das
üblicherweise verwendete Weichschaummaterial an diesem
Schichtwerkstoff gut haftet und daher leicht eine Einstellung der Oberflächenbehandlung der Papierbahn gefunden
werden kann, bei der die Haftung dieser Schicht bzw. dieser
Folie an der Papieroberfläche geringer ist als deren Haftung
an der Oberfläche des Schaumstoffkörpers.

Wie bereits erwähnt, muß die Papierqualität den Anforderungen beim Schäumen genügen. Bei Ausführungsformen der Erfindung wird daher für die mit der Folie zu beschichtenden
Papierbahnen ein Natronkraftpapier verwendet.

In der Zeichnung ist eine Ausführungsform der Erfindung
dargestellt:

Fig. 1        zeigt in stark vergrößertem Maßstab einen Schnitt
              quer zur Oberfläche einer Papierbahn durch einen
              Ausschnitt eines Kanals einer Schäumvorrichtung,


Fig. 2        zeigt einen Schnitt durch eine andere Ausführungsform der Papierbahn,

Fig. 3     eine Draufsicht auf die in Fig. 2 dargestellte Ausführungsform, wobei der besseren Darstellung halber ein Teil der Folie ausgebrochen ist;

Fig. 4     zeigt einen der Fig. 2 entsprechenden Schnitt durch eine weitere Ausführungsform der Papierbahn.

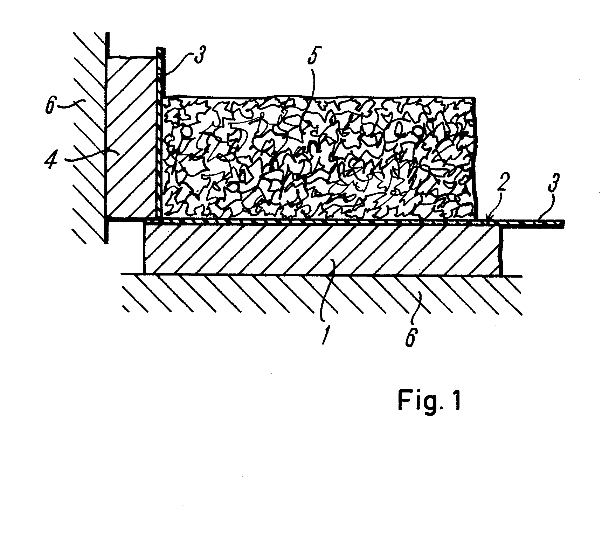

Bei der in der Fig. 1 dargestellten Ausführungsform der Erfindung besteht eine als Bodenpapier verwendete Papierbahn 1 aus Natronkraftpapier (Natronzellulose), dessen eine, dem Schaumstoff zugewandte Fläche 2 mit einer dünnen Schicht 3 überzogen ist, die aus einer Folie aus Polyäthylen oder Polypropylen besteht. Die Beschichtung der Papierbahn 1 mit der Folie erfolgt nach der Herstellung der Papierbahn 1 durch Aufsprühen des Folienwerkstoffes mittels eines Extruders. Dabei kann die geringe Haftfähigkeit der Folie auf der Papieroberfläche und ihre möglichst geringe Schichtdicke z.B. dadurch erreicht werden, daß der Folienwerkstoff mit möglichst niedriger Temperatur aufgebracht wird, daß mit möglichst kurzer Schmelzfahne gearbeitet wird und daß keine Korona-Vorbehandlung erfolgt.

Damit beim Schäumen ein maßhaltiger Körper 5 entsteht, beispielsweise ein Quader, sind entlang der Ränder der Papierbahn 1 und rechtwinklig zu ihr Seitenwände bildende Papierbahnen 4 vorgesehen, die zusammen mit der Papierbahn 1 und dem auf dieser Bodenpapierbahn befindlichen Schaumstoffmaterial 5 entlang von feststehenden, einen Schacht der Schäumvorrichtung bildenden Wänden 6 aus Aluminiumplatten durch die Vorrichtung hindurch transportiert werden. Auf die Papierbahn 1 mit Schicht 3 wird flüssiges Schaumstoffgrundmaterial 5, z.B. die Komponenten eines Polyurethan-Weichschaumes, aufgebracht, das sich sehr stark ausdehnt und schäumt. Zusammen mit einer nicht gezeichneten oberen Papierbahn bilden die Bodenpapierbahn 1 und die Seitenpapierbahnen 4 Wände eines Hohlraumes, der durch den schäumenden Werkstoff vollständig ausgefüllt wird. Nach dem Verlassen des Schachtes werden die Papierbahnen von dem Schaumstoffkörper abgezogen. Dabei löst sich die Schicht 3 von der Papieroberfläche und bleibt auf der noch klebrigen Oberfläche des Schaumstoffkörpers haften. Schließlich wird der Strang aus Weichstoffkörper in passende Abschnitte unterteilt, die beispielsweise zu Matratzen oder dergleichen weiterverarbeitet werden.

Die Erfindung ist nicht auf die Verwendung der erfindungsgemäß beschichteten Papierbahnen bei Verfahren zum Schäumen von Weichschaumkörpern beschränkt, die Papierbahnen können auch beim Schäumen von Hartschaumkörpern verwendet werden.

Auch ist die Erfindung nicht darauf beschränkt, daß die Schicht 3 aus Polyäthylen oder aus Polypropylen besteht. Vielmehr eignet sich als Folienwerkstoff jedes Material, das in dem Augenblick des Ablösens der Papierbahnen 1, 4 von dem Schaumstoffkörper 5 an der Oberfäche der Papierbahn 1 bzw. 4 weniger haftet als an dem gebildeten Schaumstoffkörper 5.

Als Material für den Weichschaumkörper werden bei der beschriebenen Ausführungsform der Erfindung beispielsweise die Komponenten Polyol und Isotionat zusammen mit den üblichen beim Schäumen verwendeten Mischkomponenten für einen Polyurethan-Schaum verwendet. Die Folie 3 wiegt z.B. ca. 8 bis 10 g, auch bis zu 20 g pro m$^2$, der Weichschaumkörper weist

die üblichen Gewichte von 12 bis 70, z.B. 40 kg pro m$^3$ auf. Die Hafteigenschaften des Schaumstoffkörpers sind in vielen Fällen je nach der Wahl des Zeitpunktes verschieden, an dem die Papierbahnen von dem Körper gelöst werden. Liegt dieser Zeitpunkt unmittelbar nach dem Zeitpunkt, in dem der Schaumstoffkörper 5 formbeständig ist, so wird der Schaumstoffkörper noch feucht und klebrig sein und daher eine besonders gute Haftwirkung auf die Folie 3 ausüben, so daß ein regelrechtes Verkleben der Folie 3 mit der Oberfläche des Schaumstoffkörpers 5 stattfindet. Die Erfindung soll jedoch nicht auf eine unlösbare Verbindung der Folie 3 mit dem Schaumstoffkörper 5 beschränkt sein, wesentlich ist lediglich, daß die Haftung der Folie 3 am Schaumstoffkörper 5 in dem Augenblick größer ist als an der Papierbahn 1, in dem die Papierbahn 1 von dem Schaumstoffkörper 5 abgezogen wird. Die Papierbahnen können zu verschiedenen Zeitpunkten vom Schaumstoffkörper abgenommen werden, z.B. zuerst die seitlichen Bahnen, z.B. nach 15 m Laufstrecke im Schacht, die Boden- und Deckenbahnen z.B. nach weiteren 15 m.

Die Erfindung hat auch den wesentlichen Vorteil, daß die Schicht verhindert, daß Lösungsmittel des Weichschaumstoffes in die Papierbahn eindringen, diese durchsetzen und sich an den festen Metallplatten der Schachtwände niederschlagen. Dies führt bei bekannten Verfahren zu empfindlichen Störungen des Arbeitsablaufes, weil diese Wände immer wieder gereinigt werden müssen, was bei einer Schachtlänge von 15 bis 30 m stets erhebliche Schwierigkeiten mit sich bringt. Bei Verwendung des erfindungsgemäß beschichteten Papiers kann daher auf besondere Imprägnierungen einer Papierbahn verzichtet werden, die ein solches Durchtreten von Lösungsmitteln o.dgl. Chemikalien des Schaumstoffkörpers durch die
Papierbahn hindurch verhindern sollen.

Durch das erfindungsgemäße Verfahren kann das abgetrennte
Natronpapier wieder einer neuen Papierherstellung zugeführt
werden und kommt nicht wie bisher auf die Mülldeponie. Auch
besteht durchaus die Möglichkeit, das erfindungsgemäß beschichtete Papier auch zum Schäumen in einer gegebenenfalls
geschlossenen Form und nicht nur wie in vorliegendem Beispiel zum Blockschäumen zu verwenden.

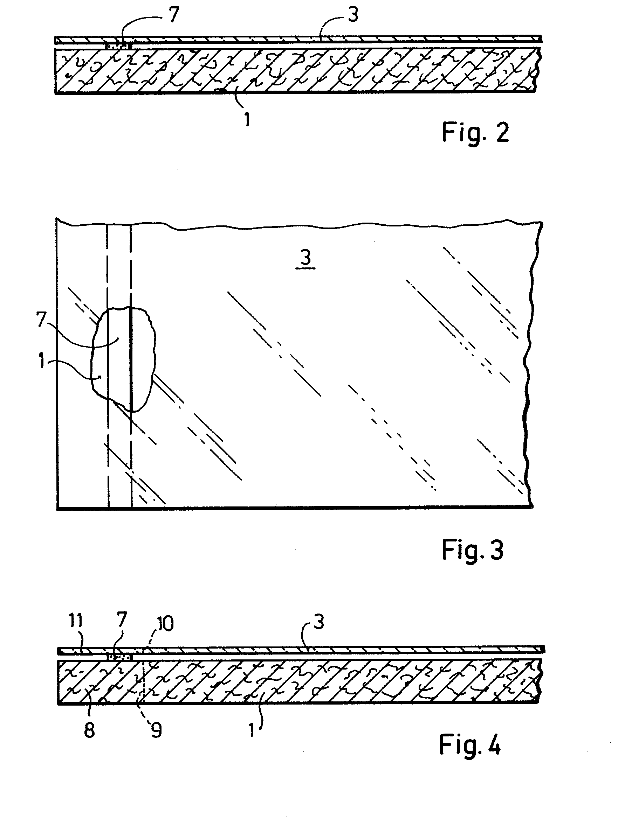

Bei der in Fig. 2 und 3 dargestellten Ausführungsform der
Erfindung besteht die Schicht 3 aus einer Folie. Diese ist
im Bereich der beiden Ränder der Papierbahn auf der Papierbahn 1 bzw. 4 aufgeklebt, beispielsweise kann eine Klebstoffschicht 7 in einem Millimeter oder Zentimeter breiten,
parallel zum Rand verlaufenden Streifen auf die Papierbahn 1
bzw. 6 aufgesprüht sein. Bei der dargestellten Ausführungsform verläuft der Klebstoffstreifen 7 in einem Abstand von
dem Rand der Papierbahn und der Folie 3. Anstelle eines
Klebstoffstreifens können auch mehrere Klebstoffstreifen
vorgesehen sein. Der Klebstoff des Streifens 7 kann so
eingestellt sein, daß beim Entfernen der Papierbahn 1 von
den Schaumstoffkörper seine Klebekraft geringer ist als die
Kraft, mit der die Folie 3 an dem Schaumstoffkörper haftet. Ist die Klebekraft des Klebestreifens 7 jedoch größer
als die Kraft, mit der die Folie 3 an dem Schaumstoffkörper haftet, so wird der den Klebestreifen 7 enthaltende
Randabschnitt der Papierbahn nach dem Schäumen des Schaumstoffkörpers abgeschnitten, so daß die Papierbahn von der
Folie 3 völlig getrennt ist. Die Papierbahn 1 kann dann einem Wiederaufbereitungsverfahren zugeführt werden. Das Abtrennen eines den Klebestreifen 7 enthaltenden Randabschnittes 8 der Papierbahn 1 kann mit einem Rund- oder Flachmesser erfolgen, das in der Schäumvorrichtung angeordnet ist. Bei der in Fig. 4 dargestellten Ausführungsform der Erfindung erfolgt die Abtrennung des Randabschnittes 8 mit Hilfe einer Perforierung 9, die sowohl in der Papierbahn 1 als auch in der Folie 3 vorgesehen ist, wobei der Klebestreifen 7 im Bereich des durch die Perforierung 9 begrenzten Randabschnittes 8 verläuft.

Anstelle eines längs verlaufenden, nicht unterbrochenen Klebestreifens 7 kann der über die Perforierung 10 mit der Folie 3 zusammenhängende Randabschnitt 11 der Folie auch über einzelne Klebepunkte mit dem Randabschnitt 8 der Papierbahn 1 verbunden sein. Auch kann der Klebestreifen 7 in Ausnahmefällen durch ein zweiseitig klebendes Band dargestellt sein.

Die Klebstoffschicht 7 kann ca. 1 mm dick sein.

<u>Patentansprüche</u>

1. Verfahren zum Schäumen von Weichschaum aus Kunststoff unter Verwendung von mindestens einer Papierbahn als Boden- und/oder Seiten- und/oder Oberpapier zur Begrenzung des Schaumstoffkörper während des Schäumens, die nach dem Schäumen vom Schaumstoffkörper entfernt wird, dadurch gekennzeichnet, daß die Papierbahn an der mit dem Schaum (5) in Berührung kommenden Oberfläche (2) eine Schicht (3) aufweist, die bei dem Entfernen der Papierbahn (1) an dem Schaumstoffkörper (5) verbleibt.

2. Papierbahn zur Durchführung des Verfahrens nach Anspruch 1, dadurch gekennzeichnet, daß die Schicht (3) aus einer Folie besteht.

3. Papierbahn nach Anspruch 2, dadurch gekennzeichnet, daß die Folie (3) an den Rändern der Papierbahn (1) angeklebt ist.

4. Papierbahn nach Anspruch 3, dadurch gekennzeichnet, daß zumindest die Folie (3) eine Perforierung (10) aufweist, die parallel zum Rand der Papierbahn verläuft und daß die Klebung (7) zwischen der Perforierung (10) und dem Rand der Papierbahn vorgesehen ist.

5.  Papierbahn nach Anspruch 4, dadurch gekennzeichnet,
    daß die Kraft, die zum Aufreißen der Perforierung (10)
    der Folie (3) erforderlich ist, geringer ist als die
    Haftung der Folie (3) an dem Schaumstoffkörper (5).

6.  Papierbahn nach Anspruch 4, dadurch gekennzeichnet,
    daß im Bereich der Perforierung (10) der Folie (3)
    auch die Papierbahn (1) eine Perforierung (9) aufweist.

7.  Papierbahn nach einem der Ansprüche 2 bis 6, dadurch
    gekennzeichnet, daß die Schicht (3) aus einer Folie
    aus Polyäthylen oder Polypropylen besteht.

8.  Papierbahn nach einem der Ansprüche 2 bis 7, dadurch
    gekennzeichnet, daß die Papierbahn aus Natronkraftpapier besteht.

9.  Papierbahn zur Durchführung des Verfahrens nach Anspruch 1 oder Papierbahn nach Anspruch 2, dadurch
    gekennzeichnet, daß die Schicht (3) auf die Papierbahn
    (1) aufkaschiert ist.

10. Papierbahn zur Durchführung des Verfahrens nach Anspruch 1 oder Papierbahn nach Anspruch 2, dadurch
    gekennzeichnet, daß die Schicht (3) auf die Papierbahn
    (1) aufgesprüht ist.

11. Papierbahn zur Durchführung des Verfahrens nach Anspruch 1 oder Papierbahn nach einem der vorhergehenden
    Ansprüche 2 bis 10, dadurch gekennzeichnet, daß die

0148491

Haftung der Schicht (3) an der Papierbahn (1) im
Augenblick des Entfernens der Papierbahn (1) von dem
geschäumten Schaumstoffkörper (5) geringer ist als
ihre Haftung an dem Schaumstoffkörper (5).

12. Papierbahn nach einem der Ansprüche 2 bis 11, dadurch
gekennzeichnet, daß die Folie (3) mit einem Klebstoff
an der Papierbahn (1) befestigt ist, der zum Zeitpunkt
des Lösens der Papierbahn vom geschäumten Schaumstoffkörper eine geringere Haftkraft aufweist als die
Haftkraft, mit der die Folie (3) an dem Schaumstoffkörper haftet.

Fig. 1

Fig. 2

Fig. 3

Fig. 4